# EUROPEAN PATENT APPLICATION

(11) **EP 1 271 527 A2**
(43) Date of publication of application: **02.01.2003**
(21) Application number: 02018551.8
(22) Date of filing: 04.03.1999
(51) Int. Cl.: G11B 27/32, H04N 5/85, G11B 20/12, G11B 19/02, G11B 27/10

(54) **Storage medium storing catalogue information and apparatus and method for playing back catalogue information**

(30) Priority: 06.03.1998 KR 9807525
(62) Divisional of application: 99301621.1
(71) Applicant: SAMSUNG ELECTRONICS CO., LTD., Suwon-City, Kyungki-do (KR)
(72) Inventor: Ko, Jung-wan, Yongin-city, Kyungki-do (KR); Heo, Jung-kwon, Seocho-gu, Seoul (KR); Heo, Jae-hoon, Kwonsun-gu, Suwon-city, Kyungki-do (KR); Kang, Jung-seuk, Songpa-gu, Seoul (KR)
(74) Representative: Waddington, Richard

(57) **Abstract**

A storage medium for storing catalogue information and catalogue information playback apparatus and method are provided. By the method, catalogue information formed of a still picture and additional information together with audio data are recorded on a storage medium such as a DVD (210), which is an optical record storage medium, and the catalogue information is played back during playback of audio, to thereby provide various information on the audio. Also, the apparatus includes a buffer memory (250) for catalogue playback maintaining the predetermined standard and compatibility, and capable of real-time reading during playback of audio, and automatically playing back the catalogue content, corresponding to the playback state of the audio data, when there is no additional selection of a user.

## Description

The present invention relates to the field of optical recording and/or playback, and more particularly, to a storage medium storing audio data and catalogue information related to the audio data and an apparatus and method for playing back catalogue information.

In an optical recording and/or playback apparatus in which a digital versatile disk (DVD) is used as a storage medium, a catalogue function, and an apparatus or method for performing the catalogue function has not been proposed.

In this context a catalogue typically indicates prints for effectively transferring to a viewer information on manufacturing audio as a main data recorded on the storage medium, the record contents, and the composer, the artist and/or a performer, or material and immaterial information for performing the same role. Particularly the catalogue is an additional data for illustrating the contents of the audio which is main data recorded on the storage medium, consisting of additional information such as still pictures and caption as a video information.

The catalogue data which is played back in a playback apparatus having a video decoder, preferably, has an inspecting function for reading the desired contents of the catalogue, without interfering with the playback of the audio.

It is also preferable that the catalogue information can be easily manufactured using the established editing system for DVD-Video.

In order to satisfy the above-described conditions, two types of information, i.e., audio and catalogue data of which are different functions in a storage medium must be simultaneously played back. Thus, even when the audio data is played back at the maximum transmission speed of the playback apparatus, a predetermined amount of the catalogue information must have already been played back and stored in a temporary storage, so that both the audio and the catalogue contents can be simultaneously played back.

That is, when the storage medium, in which information for forming the catalogue is stored, is inserted into a driver, a player or an editor, the catalogue information stored in the storage medium is read and stored in a temporary storage, i.e., a memory to be output in the form of an image if necessary. Here, in order to store the catalogue information read from the storage medium, in the memory, the image size must be defined, and further a method for effectively using the memory must be provided.

It is also preferable that navigation information, which has been proposed in the DVD-Video, i.e., search information added to the catalogue information such that a user can search an arbitrary catalogue page, and a specification for processing the search information must be provided. Further, an editing system manufacturing a catalogue corresponding to the specification shares with an editing system according to the DVD-Video specification.

Here, the DVD-Read Only Memory (ROM) means a record medium defined by the physical specification of Part 1 of a DVD specification for read-only disc produced by Toshiba corporation and other companies in August, 1996 and the file system specification of Part 2 thereof. Also, the DVD-video means video edited by an image information recording method defined by the video specification of Part 3 thereof or a DVD-ROM disk in which the video is recorded.

It is an aim of embodiments of the present invention to provide a storage medium for storing catalogue information to satisfy the above-described conditions.

It is another aim to provide, playback apparatus and method for reading desired catalogue contents from catalogue information related to audio data, while the audio data stored in a DVD disk is played back.

It is still another aim of embodiments of the present invention to provide an apparatus and method for automatically accessing the location of the catalogue using real-time playback information extracted from audio data to be played back without command to read the catalogue in a predetermined location, while audio data stored in a DVD disk is played back.

According to an aspect of the invention a playback apparatus to perform a playback operation on a storage medium in which audio data and catalog information related to the audio data are recorded, wherein the catalog information comprises common catalog data for information commonly applied for the entire audio data recorded on the storage medium, and title catalog data having information corresponding to distinct items of the audio data, the playback apparatus comprising:
a decoding unit to decode the audio data, the common catalog data and the title catalog data;
a storage device to store the common catalog data and the title catalog data of the audio data which is to be played back; and
a controller to control the decoding unit and the storage device, so as to simultaneously decode the audio data to be played back and the common catalog data and the title catalog data corresponding to the audio data to be played back.

Preferably, the controller stores the common catalog data and the title catalog data of the audio data which is to be played back prior to playing back the audio data.

Preferably, catalog playback information is stored on the storage medium, and the controller distinguishes whether the catalog playback information exists in the storage medium by defining file names of the catalog playback information, defining a region of the storage medium predetermined by a physical or logical address designated as a space for storing the catalog playback information, or defining information indicating whether a file exists in which the catalog playback information is stored and a location of the file in a volume information region, during the playback operation.

According to another aspect of the invention a playback apparatus to perform a playback operation on a storage medium in which audio data and catalog information related to the audio data are recorded, wherein the catalog information comprises common catalog data for information commonly applied for the entire audio data recorded on the storage medium, and title catalog data having information corresponding to distinct items of the audio data, the playback apparatus comprising:
a storing unit which stores the common catalog data, the title catalog data and additional information relating to the audio data;
a video decoder which decodes the common catalog data, the title catalog data and the additional information, to generate a restored image;
an audio decoder which decodes the audio data, to generate restored audio signals; and
a controller which controls playback of the common catalog data and the title catalog data corresponding to a selection of a user.

Preferably, the controller reads the common catalog data and the title catalog data from the storing unit in a predetermined sequence.

Preferably, the common catalog data and the title catalog data stored in the storing means are defined within a predetermined size.

Preferably, a data size of a sum of the common catalog data and data of one title catalog from a plurality of title catalogs which form the title catalog data is smaller than a capacity of the storing unit.

Preferably, the restored image is a still picture for background display, and the additional information is a sub-picture for transferring characters.

Preferably, the video decoder decodes the common catalog data and the title catalog data according to a standard digital versatile disk-video (DVD-Video) specification.

Preferably, catalog playback information is stored on the storage medium, the catalog playback information includes a file identifier and an audio presentation information table determining a location of the common catalog data and the title catalog data to be played back corresponding to a predetermined time in accordance with real-time playback information of audio obtained from the audio data during real-time playback, wherein if a user does not enter a catalog selection command for a given time during a playback mode of the audio data, the controller reads the audio information table to extract the corresponding common catalog data and the title catalog data of the audio data being played back.

According to another aspect of the invention a playback apparatus to perform a playback operation of audio data and catalog information related to the audio data, wherein the audio data, catalog information and the catalog playback information are stored on a storage medium, and the catalog information comprises common catalog data for information commonly applied for the entire audio data recorded on the storage medium, and title catalog data having information corresponding to distinct items of the audio data, the playback apparatus comprising:
an optical pickup which reads the audio data, the common catalog data and the title catalog data; and
a decoding unit which decodes the audio data, the common catalog data and the title catalog data read from the storage medium.

The playback apparatus preferably further comprising:
a storage device which stores the read common catalog data and title catalog data, prior to the optical pickup reading the audio data from the storage medium.

The playback apparatus preferably further comprising:
a controller which controls playback of the common catalog data and the title of the title catalog data corresponding to a selection of a user and the read catalog playback information.

According to another aspect of the invention a playback apparatus for playing back catalog information relating to DVD-audio and the DVD-audio, wherein the catalog information and the DVD-audio are stored on a DVD, and the catalog information comprises common catalog data for information commonly applied for the entire audio data recorded on the storage medium, and title catalog data having information corresponding to distinct items of the audio data, the playback apparatus comprising:
an optical pickup which reads the DVD-audio and the corresponding common catalog data and title catalog data; and
a processor which reproduces the common catalog data and title catalog data using an editing system for DVD-video and the DVD-audio.

Preferably, the DVD stores DVD-video, and the processor reproduces the DVD-video according to the editing system for the DVD-video.

According to another aspect of the invention a recording apparatus to perform a recording on a storage medium, comprising:
an encoding unit to encode audio data and catalog information related to the audio data, wherein the catalog information comprises common catalog data for information commonly applied for the entire audio data recorded on the storage medium, and title catalog data having information corresponding to distinct items of the audio data; and
an optical pickup to recording the encoded audio data, and the encoded common catalog data and title catalog data.

Preferably, the encoding unit encodes catalog playback information, the optical pickup records the encoded audio data, common catalog data and title catalog data in accordance with the catalog playback information, the recording apparatus further comprising a controller which defines file names of the common catalog data and title catalog data for storage on the storage medium, defines a region of the storage medium predetermined by a physical or logical address designated as a space for storing the catalog playback information, or defines information indicating whether a file exists on the storage medium in which the catalog playback information is stored and a location of the file in a volume information region of the storage medium.

Preferably, the encoding unit encodes video data representing an image which is a still picture relating to the audio data, and additional information which represents a sub-picture for transferring characters; and
the optical pickup records the encoded video data and the encoded additional information on the storage medium.

Preferably, the encoding unit encodes the common catalog data and title catalog data according a standard digital versatile disk-video (DVD-video) specification.

Preferably, the optical pickup records the common catalog data and title catalog data in an image information region of a volume space of the storage medium, and records the audio data in an audio region of the storage medium.

Preferably, the optical pickup records the common catalog information and the title catalog information in an image title set of the image information region, and the optical pickup records the catalog playback information in an audio management region of the audio region and distinct items of the audio data in respective audio title sets of the audio region.

Preferably, the title catalog information is divided in distinct title catalog information corresponding to the respective ones of the distinct items of the audio data, and the optical pickup records the distinct title catalog information into respective program chains of the image title set.

Preferably, the catalog playback information comprises locations of image information in which the common catalog data and the title catalog data are recorded, a file identifier, and an auto presentation information table in which is stored the locations of one item of the common catalog data and the title catalog data to be played back corresponding to a predetermined time according to real-time playback information of the audio data obtained by real-time playback of the audio data.

Preferably, the catalog playback information comprises locations of image information in which the catalog information is recorded, a file identifier, and an auto presentation information table in which is stored the locations of one item of the catalog information to be played back corresponding to a predetermined time according to real-time playback information of the audio data obtained by real-time playback of the audio data, the file identifier comprises a plurality of program chain numbers corresponding to the program chains of the common catalog information and the title catalog information, catalog pointers pointing to locations on the storage medium of the program chains, and the auto presentation table has playback time information which appropriately and automatically plays back the catalog information, using the real-time playback information obtained from the audio data while each recorded item of the title catalog information is played back, and information on the playback location of the catalog information, so that the auto presentation information table has information on still pictures and sub-pictures to be played back within the catalog information when a user has not input commands while one item of the title catalog information is played back.

Preferably, the optical pickup records the common catalog information and the title catalog information in an image title set of an image information region of the storage medium, and the optical pickup records the catalog playback information in a predetermined information region of an audio file and distinct items of the audio data in respective audio title sets of an audio region of the storage medium.

Preferably, the title catalog information is divided in distinct title catalog information corresponding to respective ones of distinct items of the audio data, and the optical pickup records the distinct title catalog information into respective program chains of an image title set on the storage medium.

The recording apparatus preferably further comprising:
a decoding unit which decodes the encoded audio data and the encoded common catalog data and title catalog data read from the storage medium;
wherein the optical pickup reads the encoded audio data, common catalog data and title catalog data.

The recording apparatus preferably further comprising:
a storage device which stores the common catalog data and title catalog data of the audio data which is to be played back; and
a controller which controls the decoding unit and the storage device, so as to simultaneously decode the audio data to be played back and the common catalog data and title catalog data corresponding to the audio data to be played back in accordance with the catalog playback information;
wherein the controller distinguishes whether the catalog playback information exists in the storage medium by defining file names of the catalog playback information, defining a region of the storage medium predetermined by a physical or logical address designated as a space for storing the catalog playback information, or defining information indicating whether a file exists in which the catalog playback information is stored and a location of the file in a volume information region, during the playback operation

According to a first aspect of the invention, there is provided a storage medium storing audio data and being capable of random accessing, wherein catalogue information related to the audio data is stored in a predetermined area of the storage medium.

Preferably, the catalogue information includes common catalogue data for information commonly applied for the entire audio data recorded on the storage medium and title catalogue data having information corresponding to each distinct item of the audio data.

The catalogue information may be image information produced by the DVD-Video specification, and wherein the storage medium includes a region for recording the audio data and an image information record region for recording the catalogue information.

The catalogue data may include a still picture for a background image, a sub-picture for a caption and navigation information for controlling the same.

The region for the audio data may include an audio data recording region for recording audio data and an audio information recording region for the entire audio data and/or audio data in units of distinct items of audio data and catalogue playback information connecting the audio data to the catalogue information during playback is stored in the audio information recording region.

The catalogue playback information may include information on the location of the image information recording region in which the catalogue is recorded.

The catalogue playback information may further include a file identifier (ID) and an auto playback information table determining a location of the catalogue to be played back corresponding to a predetermined time in accordance with real-time playback information of audio obtained from the audio data during real-time playback.

According to a second aspect of the invention, there is provided a playback apparatus comprising: storing means for storing during playback audio data and catalogue information from a storage medium in which there are present audio data, catalogue information formed of information related to the audio data, and catalogue playback information connecting the audio data and the catalogue information to each other; a video decoder for providing an image restored by decoding the catalogue information and additional information; an audio decoder for providing audio signals restored by decoding the audio data; and a controller controlling to be played back catalogue information corresponding to a selection of a user and the catalogue playback information.

The catalogue information may include common catalogue data for information commonly applied for the entire audio data recorded on the storage medium and title catalogue data having information on each distinct item of the audio data, and the catalogue data selected by the user under the control of the controller is read from the storing means.

The catalogue data is preferably read from the storing means by a predetermined sequence.

The catalogue data stored in the storing means is preferably defined within a predetermined size.

The data size obtained by adding data of the common catalogue stored in the storing means to data of one selected from the plurality of title catalogues is preferably smaller than the capacity of the storing means.

The restored image is preferably a still picture for the background, and the additional information is a sub-picture for transferring characters.

According to a third aspect of the invention, there is provided a method for playing back data on the storage medium storing audio data, catalogue information formed of information related to the audio data, and catalogue playback information connecting the audio data and the catalogue playback information to each other during playback, comprising the steps of: (a) playing back the catalogue information corresponding to the catalogue playback information; and (b) playing back audio data corresponding to the played back catalogue information.

A region for the audio data preferably includes an audio data recording region for recording audio data and an audio information recording region for the entire audio data and/or audio data in units of distinct items of audio data where the catalogue playback information is stored in the audio information record region.

The storage medium may include a region for recording the audio data and an image information record region for recording the catalogue information, and wherein the catalogue information includes common catalogue data for information in common applied for the entire audio data recorded on the storage medium and title catalogue data having information corresponding to each distinct item of the audio data.

The catalogue playback information preferably includes information on a location of the image information record region where the catalogue is recorded.

The catalogue playback information may further include a file identifier and an auto presentation information table determining a location of the catalogue to be played back corresponding to a predetermined time in accordance with real-time playback information of audio obtained from the audio data during real-time playing back.

The catalogue data is preferably played back according to a predetermined sequence stored in the auto presentation information table in step (a).

The catalogue data selected by selection of a user may be played back in step (a).

Preferably, the catalogue selected by selection of a user is preferentially played back in step (a), and otherwise the catalogue data satisfies predetermined conditions to be played back.

The predetermined condition may be the case of selecting no predetermined catalogue data for a predetermined time or setting a catalogue auto presentation mode.

Preferably, the storage medium comprises: an audio region in which the audio data is stored; and a video region in which the catalogue information is stored.

The audio region preferably comprises: the audio management (AMG) region having management information on the audio data, and a plurality of audio title sets (ATS) in which the audio data is recorded; and the video region preferably comprises: a video management (VMG) region having management information on the catalogue information, and a video title set (VTS) in which at least one title catalogue of the catalogue information related to each item of the audio data is recorded.

Preferably, the VTS comprises information on still pictures formed of a plurality of the title catalogue and sub-pictures relating to the audio data, and navigation information for controlling the information on the still pictures and the sub-picture.

Preferably, the AMG region comprises catalogue playback information to connect the audio data and the catalogue information during playback.

For a better understanding of the invention, and to show how embodiments of the same may be carried into effect, reference will now be made, by way of example, to the accompanying diagrammatic drawings, in which:
Figure 1 shows a digital versatile disk (DVD)-read only memory (ROM) structure of one dimension according to an example of a storage medium storing catalogue information of the present invention;
Figure 2 is an example of a table showing catalogue playback information for playing back catalogue information according to the present invention; and
Figure 3 is a block diagram of an exemplary playback apparatus for playing back catalogue information according to the present invention.

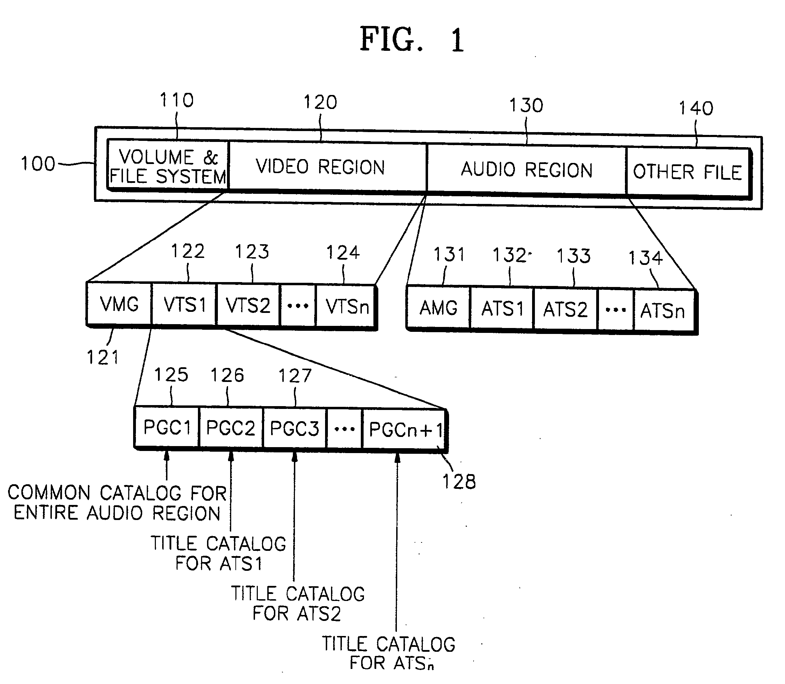

Referring to Figure 1, the storage space of the entire DVD medium is a volume space 100, which includes a volume and file system region 110 having information on the volume and recorded file structure, a video region 120 for recording image information, an audio region 130 for recording audio data and an other file region 140.

The above data regions may have no information in the video region 120, and the catalogue data related to each music may exist in a predetermined area of the audio region 130, and the other file region 140 may or may not exist.

Also, the video region 120 and the audio region 130 may consist of a video management (VMG) region 121 and an audio management (AMG) region 131 having management information on the recorded image and audio, respectively and video title sets (VTS) 121 to 124 and audio title sets (ATS) 132 to 134, respectively, which are files in which the image and audio data are recorded. The VTS1 consists of a plurality of program chains (PGC) 125 to 128. Here, the PGC indicates a set of related data. The VTS1 file for the catalogue may have information on still pictures formed of a plurality of catalogues and sub-pictures, and navigation information for controlling the information on the still pictures and the sub-pictures. VTS2 to VTSn may have information other than the catalogue information. As shown in Figure 1, all image information related to the audio region 130 is stored in the VTS1 122, so that the video region may include only the VMG 121 and the VTS1 122.

Here, the structure of the information on the still picture and sub-picture, and the navigation, and the rules thereof are shown in the DVD-video specification.

Also, the catalogue information can be effectively used by dividing the catalogue information into one common catalogue PGC1 125 for the entire audio region and a plurality of title catalogues PGC2, PGC3, ..., PGCn+1 126, 127, 128 corresponding to each audio title recorded in the audio region 130. That is, a first audio title set (ATS1), i.e., the title of a catalogue related to a first item of music (such as a song) is stored in PGC2, and a second title set (ATS2), i.e., the title of a catalogue related to a second item of music is stored in PGC3, and thus the nth audio title set (ATSn), i.e., the title of a catalogue related to the nth item of music is stored in PGCn+1. The common catalogue and each title catalogue are formed in a unit of a program chain (PGC) in the video title.

According to embodiments of the present invention, the catalogue playback information for connecting VTS and ATS to each other to play back is stored in the AMG region 131 or a predetermined region (information region) of the audio file. The AMG region 131 has a space for recording information on the entire audio region and each title, and a location of the catalogue information may be additionally recorded on the AMG region 131.

In an embodiment of the present invention, the catalogue playback information which is stored in the AMG region or the audio file region, may be stored in any location. Also, when the disk begins to be read, an appropriate means is provided capable of distinguishing whether there exists the catalogue playback information or not. The means may define the file names, a region of a disk predetermined by a physical or logical address may be designated as a space for storing catalogue playback information, or information indicates whether existence of a file in which the catalogue playback information is stored or not and a location of the file in the data region to be necessarily read such as a volume information region when the disk is read.

The catalogue playback information may include the location of the image information in which the catalogue is recorded, a file identifier (ID) and an auto presentation information table in which the location of the catalogue to be played back corresponding to the predetermined time according to real-time playback information of the audio obtained by real-time playback the audio.

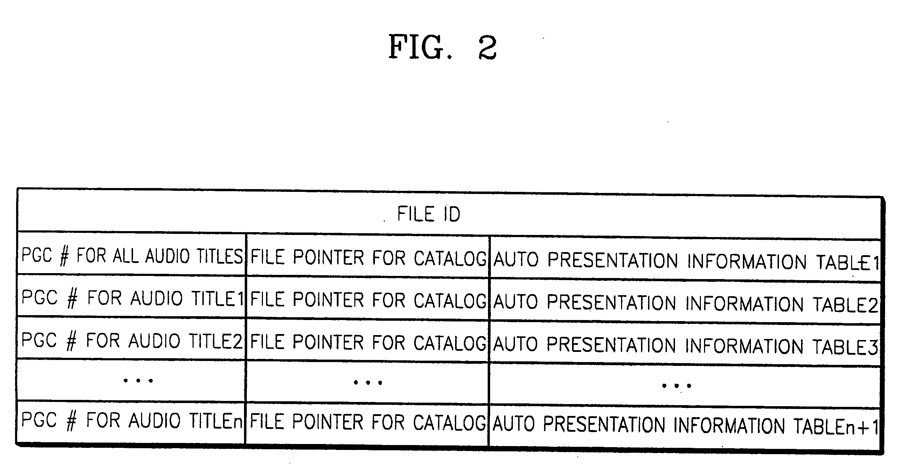

In Figure 2, the file ID can recognize a file in which the catalogue playback information is recorded. A catalogue PGC number indicates the number corresponding to a common catalogue and a title catalogue in the video region in which the catalogue is recorded. A catalogue pointer indicates the location on the disk of a file or a PGC in which the catalogue is recorded.

Also, the auto presentation information table has playback time information capable of appropriately and automatically playing back the catalogue, using the real-time playback information obtained from the audio data while each recorded title is played back, and information on the playback location of the catalogue, so that the auto presentation information table has information on the still picture and the sub-picture to be played back within catalogues when a user has no commands while one title is played back.

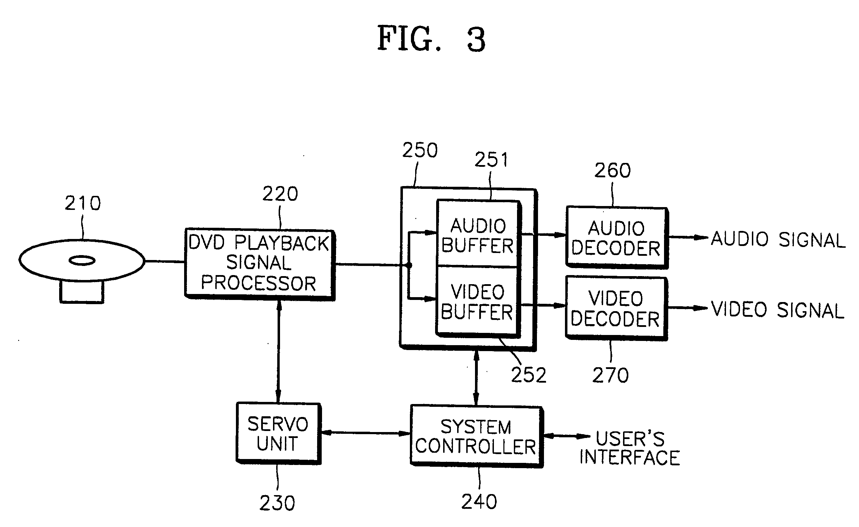

In Figure 3, a signal read from a disk 210 is restored to a digital signal through a DVD playback processing unit 220 according to the physical specification of the DVD-ROM, to provide the restored signal to a buffer memory 250.

The restored digital signal is divided into audio data and video data under the control of a system controller 240 and the audio data of the DVD-Audio specification as an example is written in an audio buffer 251, and video data of the DVD-Video specification as an example, i.e., catalogue data is written in a video buffer 252. At this time, the buffer memory 250 can use one memory space or an additional memory.

The catalogue data stored in the buffer memory 250 is read in accordance with a control signal generated by the system controller 240 and the read catalogue data is restored to an image signal to be output. At this time, the system controller 240 generates an appropriate control signal based on control commands of a user through a remote controller, the auto presentation information table according to catalogue playback information, real-time playback information extracted from the audio data, and navigation information of the catalogue data, such that the catalogue data stored on the video buffer 252 to be played back is output through the video decoder 270.

Meanwhile, the audio data of the DVD-Audio specification read from the audio buffer 251 is provided to the audio decoder 260 and the provided audio data is restored to an audio signal to be output.

Here, the video decoder 270 indicates a device restoring image data produced by the DVD-Video specification to an initial image and information added to the image. The apparatus for playing back the DVD-Video has already been produced and such apparatus is well-known to a person skilled in the art. Also, the audio decoder 260 restores the audio data consisting of the encoded audio data coded by linear pulse coded modulation (linear PCM) or a predetermined manner, management information for managing the audio data and real-time playback information to initial audio and additional information. The system controller 240 and a servo unit 230 controls the system to appropriately operate using the control commands from a user and various control signals obtained by playback signals.

Subsequently, playback operation will be described by a video buffer 252 writing and reading catalogue data shown in Figure 3.

The playback apparatus of Figure 3 must store information on the common catalogue and the title catalogue in the video buffer 252, before a predetermined audio title is played back. If not, desired catalogue information cannot be played back while the music is played back.

When either the common catalogue or the title catalogue is selected, the sum of the two catalogue data should be smaller than the memory capacity of the video buffer 252 for playing back the catalogue. Referring to Figure 1, assuming that the PGC1 125 is the common catalogue for the entire audio region, and the PCG2 126 is the audio title 1, i.e., the title catalogue 1 related to the first music, and the PCG3 127 is the title catalogue 2 for the second music, and the PGCn+1 128 is the title catalogue n for the nth music, the catalogue information required for playing back the music has the common catalogue information and the title catalogue for the music to be played back.

Meanwhile, the amount of buffer memory of the playback apparatus playing back the DVD-Video is approximately 4 MB (megabytes). This functions as a time buffer for resolving an inconsistency between a transmission speed of data read from the disk such as a variable buffer rate and a bit rate of audio played back in real-time or image information.

The conventional buffer must be used to play back audio in real-time, and an additional memory must be used to play back the catalogue. Thus, assuming that a memory of 16 MB is the entire buffer memory 250 when one memory is used, the memory size of the video buffer 252 for playing back the catalogue is 12MB. For instance, when the amount of the data of the common catalogue is 5MB, the amount of the title catalogue cannot exceed 7 MB.

Also, the title catalogue information for each title may not exist. When the sum of the entire catalogue data is smaller than the predetermined memory capacity of the video buffer 252, the catalogue is not classified to the common catalogue and the title catalogue, and the catalogue information on all music can be recorded in the common catalogue.

When the disk is played back initially, the system controller 240 reads volume information of the disk, the file system, and information on VMG and AMG. As described above, the PGC data in which the catalogue information exists is read from the video buffer 252 according to the catalogue playback information stored in the AMG region 131 or in a predetermined file. When required catalogue data is read, the audio information is read to provide the read audio information to the audio decoder 260 through the audio buffer 251, and the audio information is converted into an audio signal and the converted audio signal is output through the audio decoder 260.

Meanwhile, if a user selects the catalogue, i.e., if the user inputs commands for a desired catalogue through an input unit such as a remote controller for controlling the playback apparatus, the catalogue information predetermined catalogue data stored in the video buffer 252 corresponding to the input commands is provided to the decoder 270.

If the user does not input commands for playing back the predetermined catalogue, i.e., the user does not operate for a predetermined time, or the user sets an auto presentation mode, the contents stored in the video buffer 252 is output through the video decoder 270 to output an image of the predetermined catalogue using the information in the auto presentation information table.

At this time, the catalogue information consists of still pictures for the backgrounds and sub-pictures for transferring characters and the still pictures and the sub-pictures are controlled using the navigation information defined by the DVD-Video specification. Thus, compared to the case of using only still pictures, 32 sub-pictures can be selected from the DVD-Video, which supports multiple languages.

Also, if the still picture includes character information, the increase in the resolution of the still picture is required for playing back the character information to distinct pictures, so that the compression ratio cannot be increased, and the background image and the character information are divided, so that the compression ratio for the background is increased, and characters can effectively be coded using a compression method for effectively compressing characters defined by the DVD-Video.

As described above, the catalogue function is realized using the DVD-Video specification, to thereby edit the catalogue for DVD-Audio using an editing system for the DVD-Video, and the playback apparatus for playing back the catalogue of the DVD-Audio plays back also the DVD-Video, to thereby minimize additional circuits.

Also, according to embodiments of the present invention, the predetermined DVD-Video specification is used, so that the character information of the catalogue is not processed as the still picture but as the sub-picture, to thereby enable multiple language.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A playback apparatus to perform a playback operation on a storage medium in which audio data and catalog information related to the audio data are recorded, wherein the catalog information comprises common catalog data for information commonly applied for the entire audio data recorded on the storage medium, and title catalog data having information corresponding to distinct items of the audio data, the playback apparatus comprising:
a decoding unit to decode the audio data, the common catalog data and the title catalog data;
a storage device to store the common catalog data and the title catalog data of the audio data which is to be played back; and
a controller to control the decoding unit and the storage device, so as to simultaneously decode the audio data to be played back and the common catalog data and the title catalog data corresponding to the audio data to be played back.

2. The playback apparatus of claim 1, wherein the controller stores the common catalog data and the title catalog data of the audio data which is to be played back prior to playing back the audio data.

3. The playback apparatus of claim 1 or claim 2, wherein catalog playback information is stored on the storage medium, and the controller distinguishes whether the catalog playback information exists in the storage medium by defining file names of the catalog playback information, defining a region of the storage medium predetermined by a physical or logical address designated as a space for storing the catalog playback information, or defining information indicating whether a file exists in which the catalog playback information is stored and a location of the file in a volume information region, during the playback operation.

4. A playback apparatus to perform a playback operation on a storage medium in which audio data and catalog information related to the audio data are recorded, wherein the catalog information comprises common catalog data for information commonly applied for the entire audio data recorded on the storage medium, and title catalog data having information corresponding to distinct items of the audio data, the playback apparatus comprising:
a storing unit which stores the common catalog data, the title catalog data and additional information relating to the audio data;
a video decoder which decodes the common catalog data, the title catalog data and the additional information, to generate a restored image;
an audio decoder which decodes the audio data, to generate restored audio signals; and
a controller which controls playback of the common catalog data and the title catalog data corresponding to a selection of a user.

5. The playback apparatus of claim 4, wherein the controller reads the common catalog data and the title catalog data from the storing unit in a predetermined sequence.

6. The playback apparatus of claim 4 or claim 5, wherein the common catalog data and the title catalog data stored in the storing means are defined within a predetermined size.

7. The playback apparatus of any one of claims 4 to 6, wherein a data size of a sum of the common catalog data and data of one title catalog from a plurality of title catalogs which form the title catalog data is smaller than a capacity of the storing unit.

8. The playback apparatus of any one of claims 4 to 7, wherein the restored image is a still picture for background display, and the additional information is a sub-picture for transferring characters.

9. The playback apparatus of any one of claims 4 to 8, wherein the video decoder decodes the common catalog data and the title catalog data according to a standard digital versatile disk-video (DVD-Video) specification.

10. The playback apparatus of any one of claims 4 to 9, wherein catalog playback information is stored on the storage medium, the catalog playback information includes a file identifier and an audio presentation information table determining a location of the common catalog data and the title catalog data to be played back corresponding to a predetermined time in accordance with real-time playback information of audio obtained from the audio data during real-time playback, wherein if a user does not enter a catalog selection command for a given time during a playback mode of the audio data, the controller reads the audio information table to extract the corresponding common catalog data and the title catalog data of the audio data being played back.

11. A playback apparatus to perform a playback operation of audio data and catalog information related to the audio data, wherein the audio data, catalog information and catalog playback information are stored on a storage medium, and the catalog information comprises common catalog data for information commonly applied for the entire audio data recorded on the storage medium, and title catalog data having information corresponding to distinct items of the audio data, the playback apparatus comprising:
an optical pickup which reads the audio data, the common catalog data and the title catalog data; and
a decoding unit which decodes the audio data, the common catalog data and the title catalog data read from the storage medium.

12. The playback apparatus according to claim 11, further comprising:
a storage device which stores the read common catalog data and title catalog data, prior to the optical pickup reading the audio data from the storage medium.

13. The playback apparatus according to claim 12, further comprising:
a controller which controls playback of the common catalog data and the title of the title catalog data corresponding to a selection of a user and the read catalog playback information.

14. A playback apparatus for playing back catalog information relating to DVD-audio and the DVD-audio, wherein the catalog information and the DVD-audio are stored on a DVD, and the catalog information comprises common catalog data for information commonly applied for the entire audio data recorded on the storage medium, and title catalog data having information corresponding to distinct items of the audio data, the playback apparatus comprising:
an optical pickup which reads the DVD-audio and the corresponding common catalog data and title catalog data; and
a processor which reproduces the common catalog data and title catalog data using an editing system for DVD-video and the DVD-audio.

15. The playback apparatus according to claim 14, wherein the DVD stores DVD-video, and the processor reproduces the DVD-video according to the editing system for the DVD-video.

16. A recording apparatus to perform a recording on a storage medium, comprising:
an encoding unit to encode audio data and catalog information related to the audio data, wherein the catalog information comprises common catalog data for information commonly applied for the entire audio data recorded on the storage medium, and title catalog data having information corresponding to distinct items of the audio data; and
an optical pickup to recording the encoded audio data, and the encoded common catalog data and title catalog data.

17. The recording apparatus according to claim 16, wherein the encoding unit encodes catalog playback information, the optical pickup records the encoded audio data, common catalog data and title catalog data in accordance with the catalog playback information, the recording apparatus further comprising a controller which defines file names of the common catalog data and title catalog data for storage on the storage medium, defines a region of the storage medium predetermined by a physical or logical address designated as a space for storing the catalog playback information, or defines information indicating whether a file exists on the storage medium in which the catalog playback information is stored and a location of the file in a volume information region of the storage medium.

18. The recording apparatus according to claim 16 or claim 17, wherein:
the encoding unit encodes video data representing an image which is a still picture relating to the audio data, and additional information which represents a sub-picture for transferring characters; and
the optical pickup records the encoded video data and the encoded additional information on the storage medium.

19. The recording apparatus according to any one of claims 16 to 18, wherein the encoding unit encodes the common catalog data and title catalog data according a standard digital versatile disk-video (DVD-video) specification.

20. The recording apparatus according to any one of claims 16 to 19, wherein the optical pickup records the common catalog data and title catalog data in an image information region of a volume space of the storage medium, and records the audio data in an audio region of the storage medium.

21. The recording apparatus according to claim 20, wherein the optical pickup records the common catalog information and the title catalog information in an image title set of the image information region, and the optical pickup records the catalog playback information in an audio management region of the audio region and distinct items of the audio data in respective audio title sets of the audio region.

22. The recording apparatus according to claim 21, wherein the title catalog information is divided in distinct title catalog information corresponding to the respective ones of the distinct items of the audio data, and the optical pickup records the distinct title catalog information into respective program chains of the image title set.

23. The recording apparatus according to claim 17 or any one of claims 18 to 22 when dependent on claim 17, wherein the catalog playback information comprises locations of image information in which the common catalog data and the title catalog data are recorded, a file identifier, and an auto presentation information table in which is stored the locations of one item of the common catalog data and the title catalog data to be played back corresponding to a predetermined time according to real-time playback information of the audio data obtained by real-time playback of the audio data.

24. The recording apparatus according to claim 22 or claim 23, wherein the catalog playback information comprises locations of image information in which the catalog information is recorded, a file identifier, and an auto presentation information table in which is stored the locations of one item of the catalog information to be played back corresponding to a predetermined time according to real-time playback information of the audio data obtained by real-time playback of the audio data, the file identifier comprises a plurality of program chain numbers corresponding to the program chains of the common catalog information and the title catalog information, catalog pointers pointing to locations on the storage medium of the program chains, and the auto presentation table has playback time information which appropriately and automatically plays back the catalog information, using the real-time playback information obtained from the audio data while each recorded item of the title catalog information is played back, and information on the playback location of the catalog information, so that the auto presentation information table has information on still pictures and sub-pictures to be played back within the catalog information when a user has not input commands while one item of the title catalog information is played back.

25. The recording apparatus according to claim 17 or any one of claims 18 to 24 when dependent on claim 17, wherein the optical pickup records the common catalog information and the title catalog information in an image title set of an image information region of the storage medium, and the optical pickup records the catalog playback information in a predetermined information region of an audio file and distinct items of the audio data in respective audio title sets of an audio region of the storage medium.

26. The recording apparatus according to any one of claims 16 to 25, wherein the title catalog information is divided in distinct title catalog information corresponding to respective ones of distinct items of the audio data, and the optical pickup records the distinct title catalog information into respective program chains of an image title set on the storage medium.

27. The recording apparatus according to any one of claims 16 to 26, further comprising:
a decoding unit which decodes the encoded audio data and the encoded common catalog data and title catalog.data read from the storage medium;
wherein the optical pickup reads the encoded audio data, common catalog data and title catalog data.

28. The recording apparatus according to claim 17 or any one of claims 18 to 27 when dependent on claim 17, further comprising:
a storage device which stores the common catalog data and title catalog data of the audio data which is to be played back; and
a controller which controls the decoding unit and the storage device, so as to simultaneously decode the audio data to be played back and the common catalog data and title catalog data corresponding to the audio data to be played back in accordance with the catalog playback information;
wherein the controller distinguishes whether the catalog playback information exists in the storage medium by defining file names of the catalog playback information, defining a region of the storage medium predetermined by a physical or logical address designated as a space for storing the catalog playback information, or defining information indicating whether a file exists in which the catalog playback information is stored and a location of the file in a volume information region, during the playback operation.
